# EUROPEAN PATENT APPLICATION

(11) **EP 4 814 210 A1**
(43) Date of publication of application: **30.09.2026**
(21) Application number: 26166021.1
(22) Date of filing: 19.03.2026
(51) Int. Cl.: E02F 9/08, B60K 11/06, B62D 25/10, E02F 9/24

(54) **WORKING MACHINE**

(30) Priority: 28.03.2025 JP 2025057058
(71) Applicant: KUBOTA CORPORATION, Osaka-shi, Osaka 530-0011 (JP)
(72) Inventor: TAKAKI, Hiroyuki, Sakai-shi, OSAKA, 5900908 (JP)
(74) Representative: Müller-Boré & Partner Patentanwälte PartG mbB

(57) **Abstract**

The present invention includes an exterior cover (6), and two or more exterior components (7, 8) arranged in an up-down direction or in a direction intersecting the up-down direction and attached to the exterior cover (6) such that the two or more exterior components (7, 8) are visible externally. Two adjacent exterior components (7, 8) of the two or more exterior components (7, 8) include respective joint portions which overlap each other when viewed in a direction intersecting an outer surface of the exterior cover (6) and which are joined to each other.

## Description

### BACKGROUND OF THE INVENTION

### Field of the Invention

The present invention relates to working machines, such as backhoes.

### Description of the Related Art

A working machine, such as a backhoe, according to the related art includes devices such as a prime mover and a heat exchanger, and an exterior cover that covers these devices. Japanese Unexamined Patent Application Publication No. 2025-6869 describes an exterior cover including an air passage hole through which the inside and the outside of the exterior cover communicate with each other to allow air to be exhausted or introduced. The air passage hole is provided with a protecting member that allows passage of air therethrough, such as perforated metal, expanded metal, or wire mesh. The protecting member separates the inside and the outside of the exterior cover from each other. A safety component, such as a reflector (reflection plate), for example, is attached to the exterior cover such that the safety component is visible externally.

Exterior components, such as the protecting member and the safety member, attached to the exterior cover are individually fixed to the exterior cover. Accordingly, when two or more exterior components are arranged next to each other, adjacent ones of the exterior components may be attached in different manners, and the differences in the manner of attachment may have an adverse effect on appearance. More specifically, two or more exterior components may be non-continuously arranged such that, for example, two adjacent ones of the exterior components have a gap therebetween or are unevenly arranged. Thus, the design may be degraded.

### SUMMARY OF THE INVENTION

Accordingly, it is an object of one or more embodiments of the present invention to provide a working machine in which two or more exterior components can be attached to an exterior cover in a manner that provides a good appearance, allowing for improved design.

A working machine according to an example embodiment of the present invention includes an exterior cover, and two or more exterior components arranged in an up-down direction or in a direction intersecting the up-down direction and attached to the exterior cover such that the two or more exterior components are visible externally, wherein two adjacent exterior components of the two or more exterior components include respective joint portions which overlap each other when viewed in a direction intersecting an outer surface of the exterior cover and which are joined to each other.

With one or more example embodiments of the present invention, two or more exterior components can be attached to the exterior cover in a manner that provides a good appearance, allowing for improved design.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is an overall perspective view of a working machine according to an example embodiment of the present invention, viewed from the front.
FIG. 2 is an overall perspective view of the working machine according to the example embodiment, viewed from the rear.
FIG. 3 is a left side view of the working machine according to the example embodiment.
FIG. 4 is a right side view of the working machine according to the example embodiment.
FIG. 5 is a rear view of the working machine according to the example embodiment.
FIG. 6 is an exploded side view in which a portion of the working machine according to the example embodiment is removed.
FIG. 7 is an exploded perspective view in which a portion of the working machine according to the example embodiment is removed.
FIG. 8 is an exploded perspective view in which portions of the working machine according to the example embodiment are removed.
FIG. 9 is a schematic layout diagram of devices included in the working machine according to the example embodiment.
FIG. 10 is a perspective view of a side cover and exterior components (first exterior component and second exterior component) included in the working machine according to the example embodiment.
FIG. 11 is a perspective view of the side cover and the exterior components (first exterior component and second exterior component) removed from the working machine according to the example embodiment.
FIG. 12 is a perspective view of the side cover and the exterior components (first exterior component and second exterior component) of the working machine according to the example embodiment, viewed from the inside.
FIG. 13 is a partially sectioned view of the side cover and the exterior components (first exterior component and second exterior component) of the working machine according to the example embodiment.
FIG. 14 is an enlarged view of part XIV in FIG. 13.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

A working machine according to an example embodiment of the present invention will now be described with reference to the drawings. The working machine according to the present example embodiment is capable of traveling. Accordingly, in the following description, a direction along which the working machine moves straight (travels forward and rearward) will be referred to as a front-rear direction, and a direction perpendicular to the up-down direction and the front-rear direction will be referred to as a lateral direction.

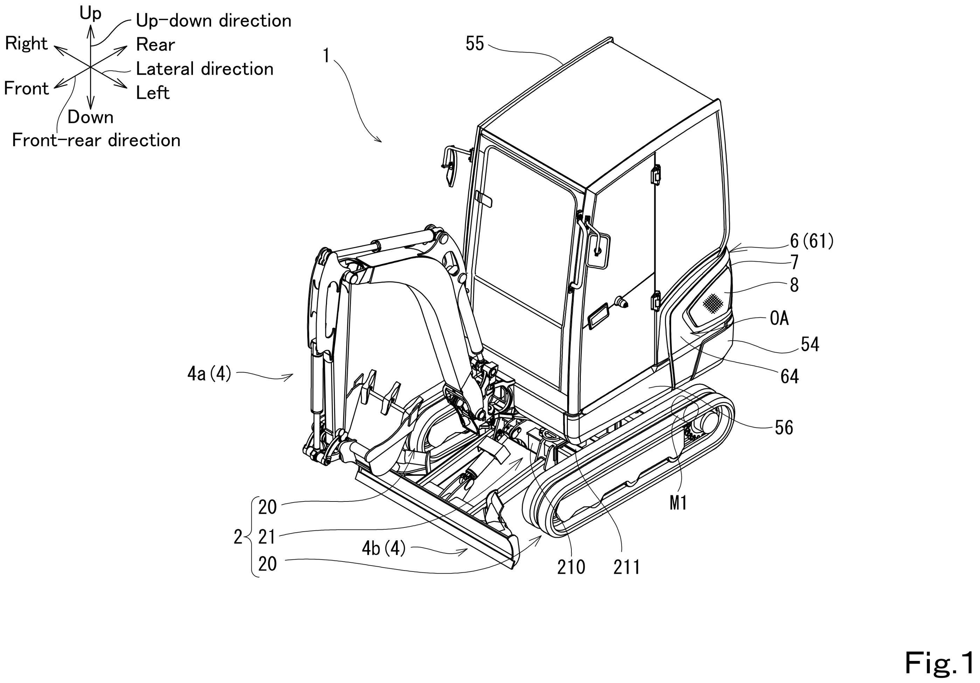

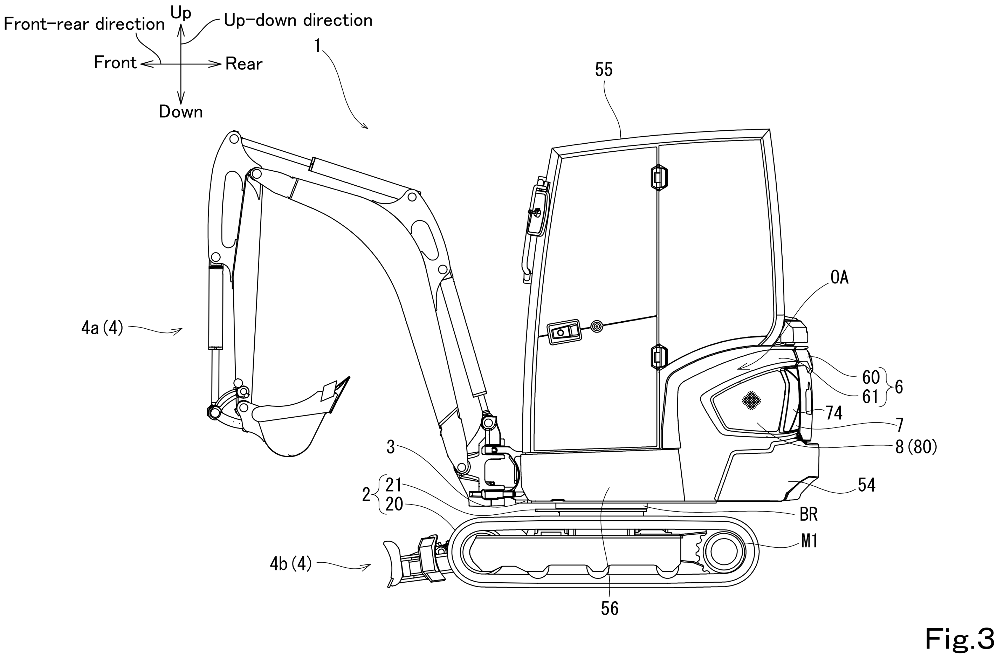

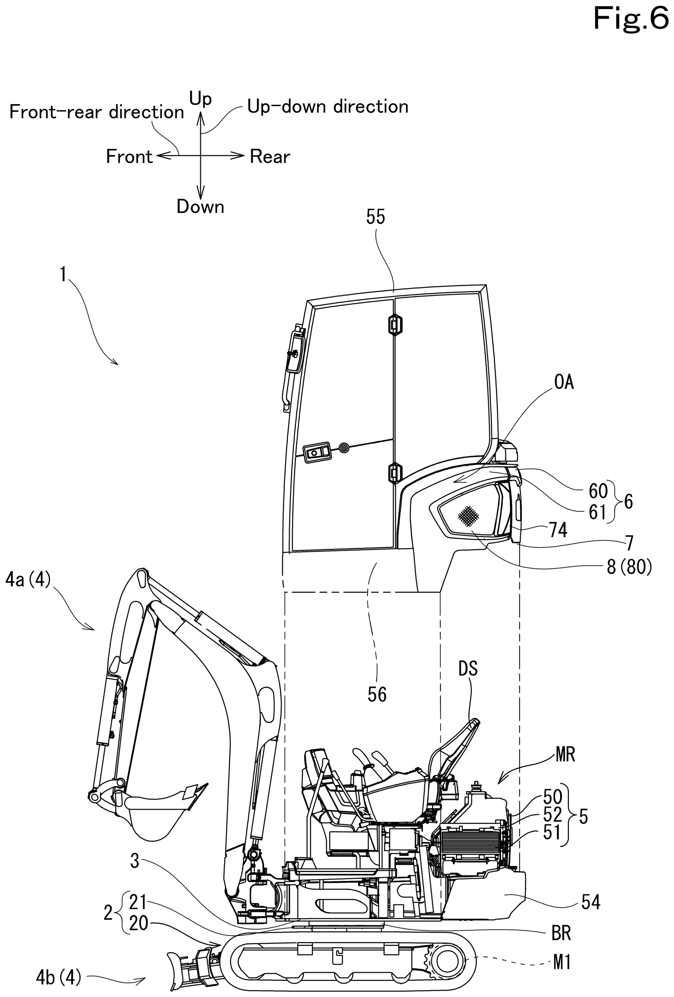

As illustrated in FIGS. 1 to 8, the working machine 1 includes an exterior cover 6 and two or more exterior components 7, 8 arranged in the up-down direction or in a direction intersecting the up-down direction and attached to the exterior cover 6 such that the two or more exterior components 7, 8 are visible externally (can be seen from outside the working machine). More specifically, the working machine 1 includes devices 5 (see FIGS. 6 to 8), an exterior cover 6 that covers the devices 5, and two or more exterior components 7, 8 attached to the exterior cover 6.

More specifically, as illustrated in FIG. 6, the working machine 1 includes a traveling device 2 to travel, and a swivel base 3 supported by the traveling device 2 and turnable about an axis extending in the up-down direction. The working machine 1 also includes working devices 4 that perform predetermined work. The working machine 1 according to the present example embodiment includes a prime mover 50, heat exchangers 51, 52, and a hydraulic device as the devices 5. The working machine 1 also includes an operator's seat DS on which a worker sits.

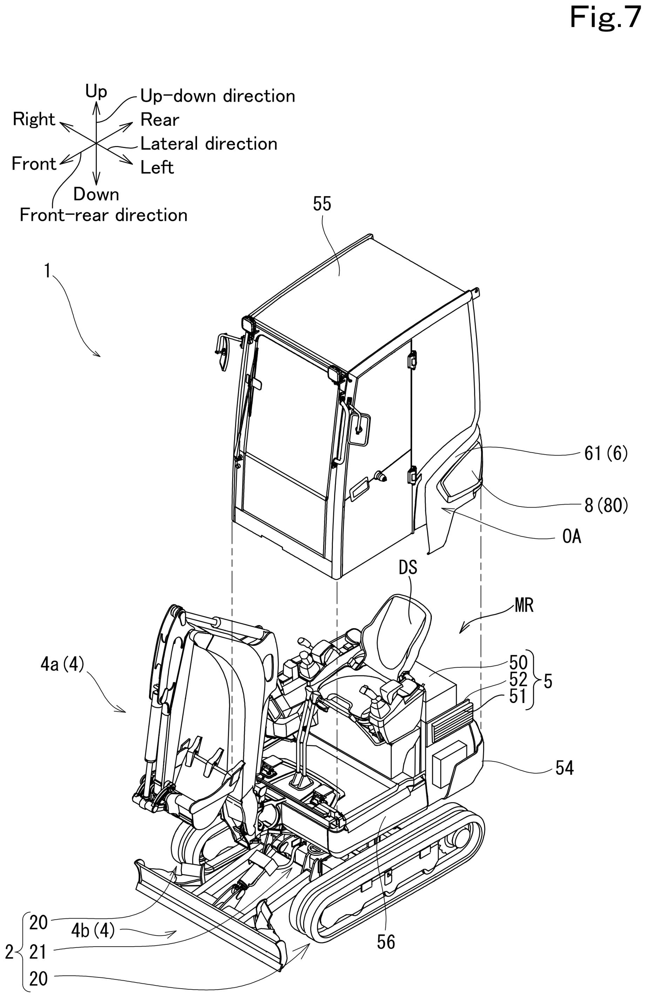

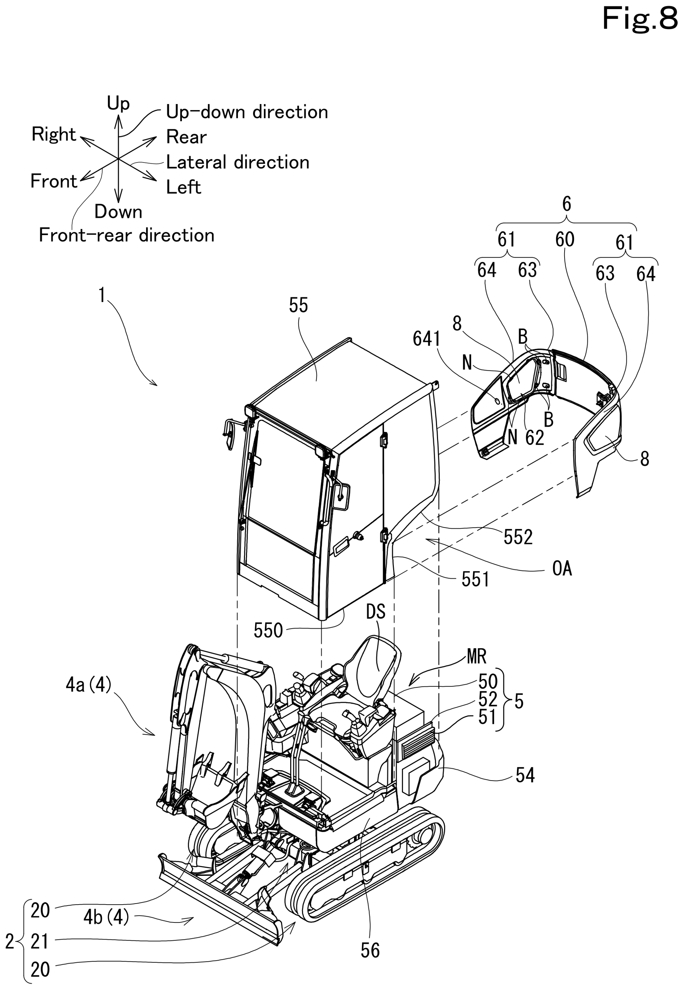

As illustrated in FIGS. 7 and 8, the traveling device 2 includes a pair of traveling units 20, 20 arranged in the lateral direction with an interval therebetween and a traveling frame 21 coupling the pair of traveling units 20, 20. In the present example embodiment, each of the pair of traveling units 20, 20 includes a traveling crawler (continuous track). The traveling device 2 includes traveling motors M1 as drive sources (see FIGS. 1 to 5). In the present example embodiment, the traveling motors M1 are hydraulic motors, and are provided on respective ones of the pair of traveling units 20, 20. The traveling units 20, 20 may include tires instead of traveling crawlers. When the traveling units 20, 20 include tires, each of the pair of traveling units 20, 20 includes a front wheel and a rear wheel arranged in the front-rear direction with an interval therebetween, and at least one of the front wheel and the rear wheel is driven by the traveling motor M1.

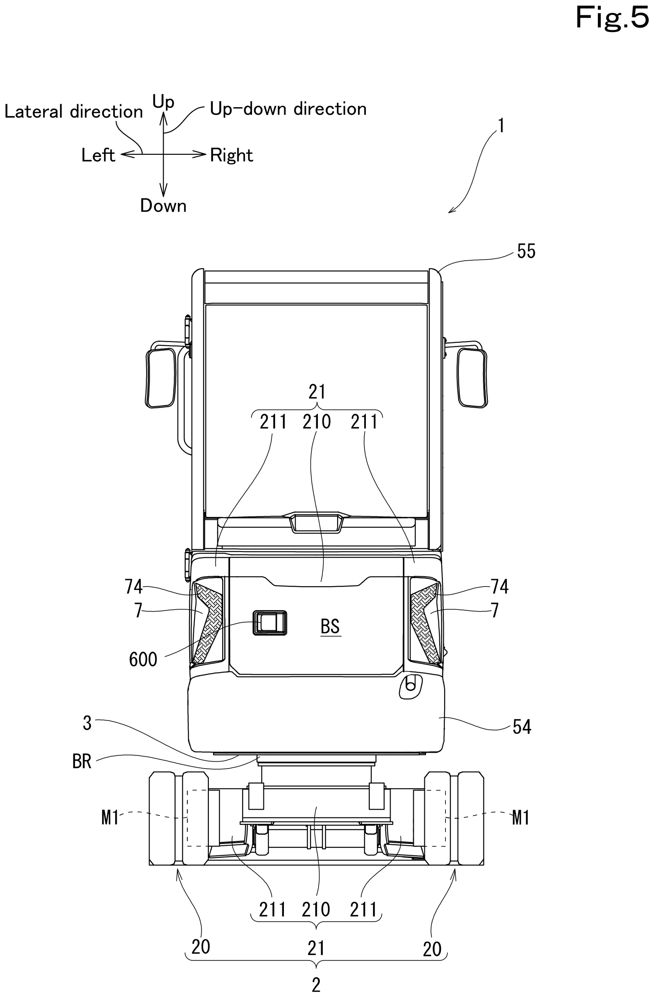

As illustrated in FIG. 5, the traveling frame 21 is provided between the pair of traveling units 20, 20. More specifically, the traveling frame 21 includes a base 210 provided at the center between the pair of traveling units 20, 20 and a pair of extensions 211, 211 extending leftward and rightward from the base 210. Each of the pair of extensions 211, 211 has one of the traveling units 20, 20 coupled thereto. A swivel bearing BR (inner race of the swivel bearing BR in the present example embodiment) is fixed to the base 210. The swivel bearing BR supports the swivel base 3 such that the swivel base 3 is turnable.

As illustrated in FIG. 6, the swivel base 3 is supported by the traveling frame 21 and supports the devices 5. More specifically, the swivel base 3 is plate-shaped and includes an upper surface and a lower surface. The swivel bearing BR is fixed to the lower surface of the swivel base 3. In the present example embodiment, the inner race of the swivel bearing BR is fixed to the base 210, and an outer race of the swivel bearing BR is fixed to the lower surface of the swivel base 3. Accordingly, the swivel base 3 faces the traveling frame 21 (base 210) with the swivel bearing BR provided therebetween. In other words, the swivel base 3 is supported by the traveling frame 21 (base 210) with the swivel bearing BR provided therebetween.

In the present example embodiment, the inner race of the swivel bearing BR includes an internal gear (internal gear wheel). The internal gear meshes with a pinion gear attached to an output shaft of a swivel motor fixed to the swivel base 3. Accordingly, when the pinion gear is driven by the swivel motor and rotates, the pinion gear revolves along the inner periphery of the internal gear. In other words, the pinion gear revolves with the swivel center of the swivel bearing BR as a rotation center. Accordingly, the swivel base 3, to which the swivel motor with the pinion gear attached thereto is fixed, turns with the swivel center of the swivel bearing BR as a rotation (swivel) center. In the present example embodiment, the swivel motor is a hydraulic motor.

The operator's seat DS and the devices 5 are provided on the upper surface of the swivel base 3. More specifically, the working machine 1 includes the prime mover 50 and the heat exchangers 51, 52 as the devices 5 provided on the swivel base 3. The working machine 1 of the present example embodiment is provided with a hydraulic system including hydraulic devices, such as a hydraulic pump, driven by the prime mover 50.

In the present example embodiment, the prime mover 50 is an internal combustion engine (engine). More specifically, the prime mover 50 is a diesel engine. Accordingly, the working machine 1 includes, as the heat exchanger 52, a radiator 52 for cooling the prime mover 50 (engine). The working machine 1 includes a fuel tank that stores fuel to be supplied to the internal combustion engine (diesel engine). The working machine 1 also includes, as the heat exchanger 51, an oil cooler 51 that cools hydraulic fluid flowing through the hydraulic system.

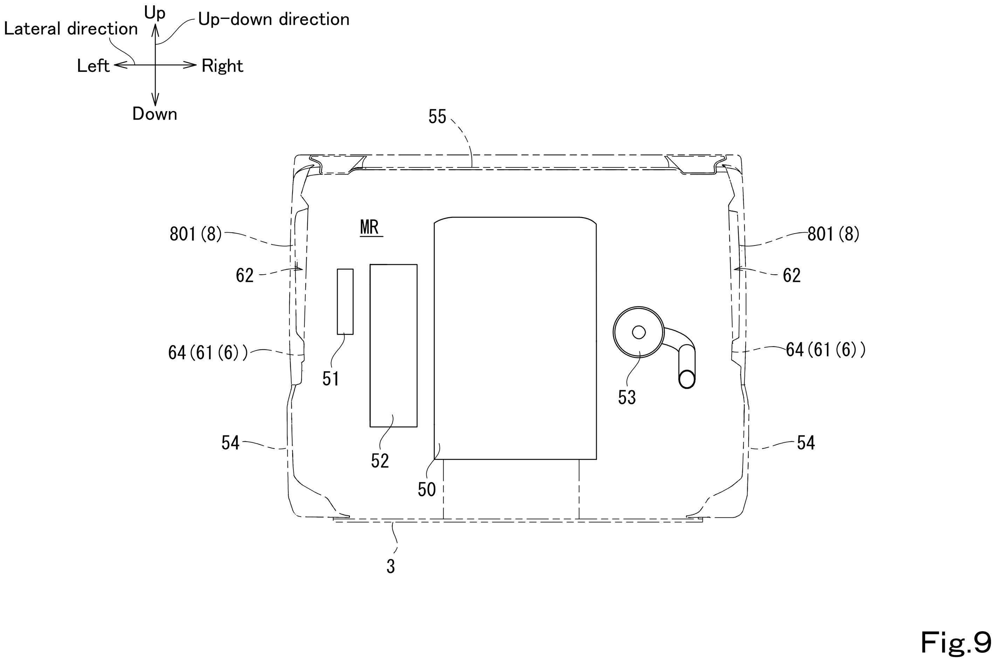

These devices 5 are arranged in the front-rear direction or in the lateral direction on the swivel base 3. In the present example embodiment, the operator's seat DS is located above the fuel tank, and the prime mover 50 and the heat exchangers 51, 52 (the radiator 52 and the oil cooler 51) are located behind the operator's seat DS (fuel tank). Thus, the devices 5 that generate heat (exhaust heat) in operation (when driven) are collectively located in a region at the rear (rear region) of the swivel base 3 in the front-rear direction. In other words, the devices 5 including the prime mover 50, the radiator 52, and the hydraulic devices are located in the region at the rear of the swivel base 3, and the operator's seat DS is provided in front of these devices 5. In the present example embodiment, as illustrated in FIG. 9, the oil cooler 51, the radiator 52, the prime mover 50 (internal combustion engine), and a muffler 53 (silencer 53) are located in the rear region of the swivel base 3 in the order of the oil cooler 51, the radiator 52, the prime mover 50 (internal combustion engine), and the muffler 53 (silencer 53) from left to right in the lateral direction. In the present example embodiment, as illustrated in FIG. 6, a counterweight 54 is attached to a rear end portion of the swivel base 3. The counterweight 54 is provided along the rear end of the swivel base 3.

As illustrated in FIGS. 1 to 8, the working machine 1 according to the present example embodiment is a backhoe, and includes a shovel 4a (excavator) and a dozer 4b as the working devices 4.

The shovel 4a and the dozer 4b are hydraulically operated in response to supply and recovery of hydraulic fluid in the hydraulic system. The shovel 4a is coupled to the swivel base 3, and the dozer 4b is coupled to the traveling frame 21. More specifically, the shovel 4a is coupled to a front end portion of the swivel base 3 and extends forward relative to the operator's seat DS. The dozer 4b is coupled to a front end portion of the base 210 of the traveling frame 21 and extends forward relative to the operator's seat DS.

The working machine 1 includes an operator's seat protector 55 that protects the operator's seat DS provided on the swivel base 3. As illustrated in FIGS. 6 to 8, the operator's seat protector 55 of the present example embodiment is a cabin 55 that is supported by the swivel base 3 and that covers the entire operator's seat DS. The cabin 55 defines an operating space (operator's cab) to be occupied by an operator. Instead of the cabin 55, the operator's seat protector 55 may be a canopy including a roof that covers the region above the operator's seat DS.

In the present example embodiment, in plan view, the operator's seat protector 55 (cabin 55) overlaps substantially the entire region of the swivel base 3 except for a portion of the rear region of the swivel base 3. In other words, the operator's seat protector 55 (cabin 55) has a size and shape such that the operator's seat protector 55 (cabin 55) overlaps the devices 5, such as the prime mover 50, located in the rear region of the swivel base 3 in plan view. In the present example embodiment, the operator's seat protector 55 (cabin 55) is separated from the upper surface of the swivel base 3 by a predetermined distance. Accordingly, the working machine 1 includes a lower cover 56 that covers the gap between the swivel base 3 and the lower end (first portion 550 described below) of the operator's seat protector 55 (see FIGS. 1 to 4).

The exterior cover 6 covers the devices 5 on the swivel base 3. In the present example embodiment, the devices 5, such as the prime mover 50 and the heat exchangers 51, 52, are located in the rear region of the swivel base 3. Accordingly, the exterior cover 6 covers the devices 5 located in the rear region of the swivel base 3. As described above, the working machine 1 of the present example embodiment includes the cabin 55 as the operator's seat protector 55 provided on the swivel base 3. Accordingly, the exterior cover 6 covers the devices 5 that are not covered by the operator's seat protector 55 (cabin 55).

More specifically, in the present example embodiment, the operator's seat protector 55 (cabin 55) overlaps substantially the entire region of the swivel base 3 except for a portion of the rear region of the swivel base 3 in plan view. However, as illustrated in FIG. 8, the lower end of the operator's seat protector 55 (cabin 55) extends upward toward the rear when viewed in the lateral direction. More specifically, when viewed in the lateral direction, the lower end of the operator's seat protector 55 (cabin 55) includes a first portion 550 extending in the front-rear direction, a second portion 551 connected to the rear end of the first portion 550 and extending upward from the first portion 550, and a third portion 552 connected to the upper end of the second portion 551 and extending rearward. Thus, the operator's seat protector 55 (cabin 55) of the present example embodiment is shaped such that the region defined by the first portion 550, the second portion 551, and the third portion 552 is outwardly open when viewed in the lateral direction. In the following description, the region (outwardly open region) defined by the first portion 550, the second portion 551, and the third portion 552 will be referred to as an open region OA.

Thus, the operator's seat protector 55 (cabin 55) does not cover the devices 5 that are located on the swivel base 3 and within the open region OA, leaving the devices 5 exposed to the outside. The open region OA includes a region below the operator's seat DS. Thus, the open region OA also overlaps the fuel tank when viewed in the lateral direction.

Accordingly, the exterior cover 6 covers the devices 5 provided on the swivel base 3. In the present example embodiment, the exterior cover 6 also covers the devices 5 in a lower rear region of the operator's seat protector 55 (cabin 55) from the sides.

More specifically, the exterior cover 6 covers the devices 5 in the rear region of the swivel base 3 in the front-rear direction and the lateral direction. In other words, the exterior cover 6 of the present example embodiment defines a hood (so-called rear hood) that covers a rear portion of the swivel base 3. In other words, the exterior cover 6 is a hood that defines a machine compartment MR that accommodates the devices 5.

In the present example embodiment, as illustrated in FIGS. 5 and 8, the exterior cover 6 is divided into a plurality of sections. More specifically, the exterior cover 6 includes a center cover 60 located at the center in the lateral direction and a pair of side covers 61, 61 on the left and right sides of the center cover 60. The exterior cover 6 is made of metal. More specifically, the exterior cover 6 is made of sheet metal, and is obtained by forming a metal plate into a predetermined shape. Accordingly, each of the center cover 60 and the pair of side covers 61, 61 is also made of metal. More specifically, each of the center cover 60 and the pair of side covers 61, 61 is made of sheet metal, and is obtained by forming a metal plate into a predetermined shape.

The center cover 60 is supported by a frame (not illustrated) supported by (fixed to) the swivel base 3. In the present example embodiment, as illustrated in FIG. 5, the center cover 60 is located between the lower end at the rear end of the operator's seat protector 55 (cabin 55) in the front-rear direction and the counterweight 54. Accordingly, the center cover 60 includes a surface (back surface BS) facing rearward in the front-rear direction. The center cover 60 functions as a door that can be opened and closed. In the present example embodiment, a hinge fixed to the frame is attached to one end portion of the center cover 60 in the lateral direction to allow the center cover 60 to rotate about an axis extending in the up-down direction. Accordingly, a door latch 600 is attached to the other end portion of the center cover 60 in the lateral direction. Thus, the center cover 60 (door) can be opened and closed when the door latch 600 is released, and maintained closed when the door latch 600 is locked. Thus, the center cover 60 is switchable between a state in which access to the machine compartment MR is restricted and a state in which access to the machine compartment MR is enabled.

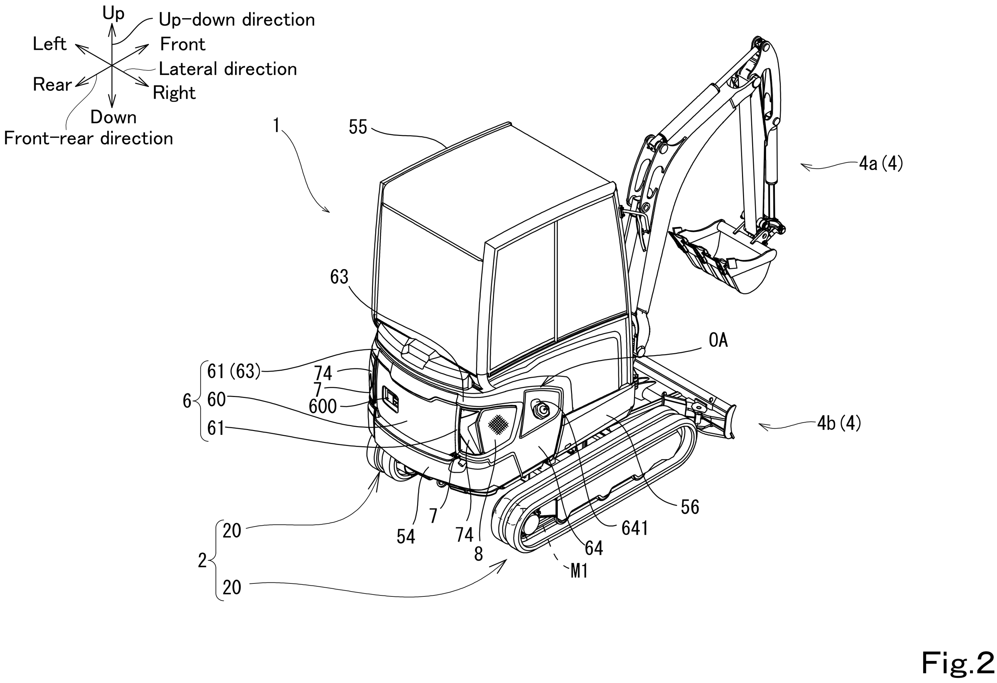

As illustrated in FIGS. 1 and 2, the two or more exterior components 7, 8 are attached to each of the pair of side covers 61, 61. More specifically, the exterior cover 6 (rear hood) includes design elements. In particular, the design of each of the side covers 61, 61 is improved because the two or more exterior components 7, 8 are attached thereto. In the present example embodiment, the two exterior components 7, 8 are attached to the rear hood (each of the side covers 61, 61) such that the two exterior components 7, 8 are visible externally.

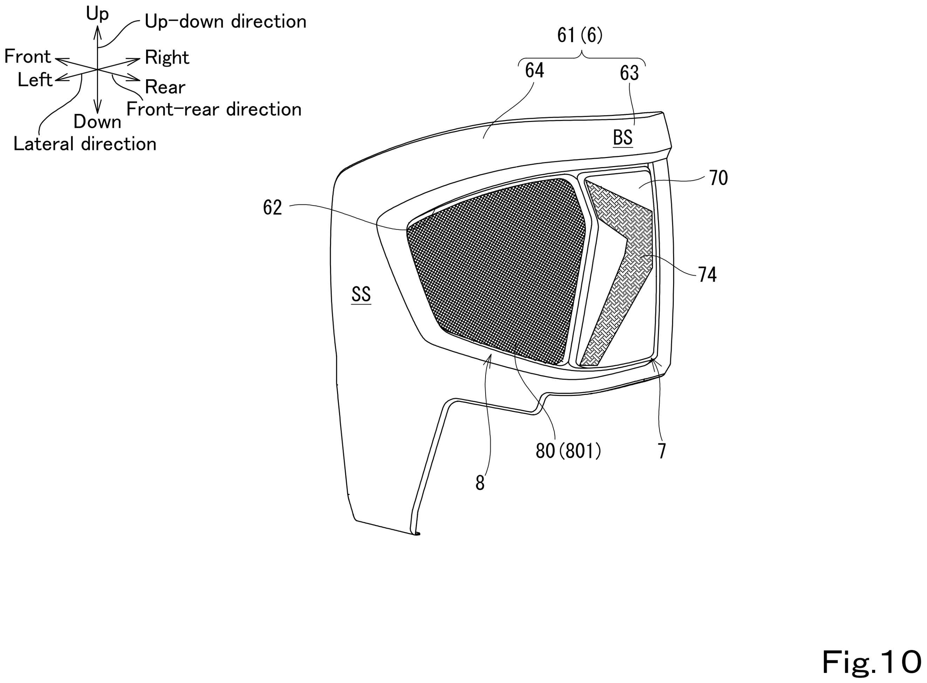

In the present example embodiment, each of the pair of side covers 61, 61 is provided next to the center cover 60 in the lateral direction. Accordingly, as illustrated in FIG. 10, each of the pair of side covers 61, 61 includes a rear cover portion 63 including a back surface BS facing rearward in the front-rear direction, similarly to the back surface BS of the center cover 60. Each of the pair of side covers 61, 61 also includes a side cover portion 64 including a side surface SS continuous with the rear cover portion 63 and facing outward in the lateral direction perpendicular to the up-down direction and the front-rear direction. The pair of side covers 61, 61 basically have the same configuration. Accordingly, only the side cover 61 on the left side in the lateral direction will be illustrated and described herein.

More specifically, each of the pair of side covers 61, 61 includes the rear cover portion 63 extending in the lateral direction and the side cover portion 64 connected to one end of the rear cover portion 63 in the lateral direction and extending in the front-rear direction. The back surface BS of the rear cover portion 63 and the side surface SS of the side cover portion 64 are continuous with each other. In the present example embodiment, a region at and around the boundary of the rear cover portion 63 and the side cover portion 64 is rounded. In other words, the rear cover portion 63 and the side cover portion 64 are shaped to conform to the outer edge of the counterweight 54 in plan view.

The rear cover portion 63 is provided side-by-side with the center cover 60. Accordingly, the dimension of the rear cover portion 63 in the up-down direction is equal or substantially equal to the dimension of the center cover 60 in the up-down direction. More specifically, the rear cover portion 63 is adjacent to the center cover 60 in the lateral direction, and covers the gap between the counterweight 54 and the lower end at the rear end of the operator's seat protector 55 (cabin 55) in the front-rear direction.

As illustrated in FIG. 8, the side cover portion 64 of each of the pair of side covers 61, 61 extends from the rear cover portion 63 to the open region OA in front of the rear cover portion 63, and covers the open region OA. In the present example embodiment, the side cover portion 64 is shaped to conform to the second portion 551, the third portion 552, the swivel base 3, and the counterweight 54. In other words, the side cover portion 64 has a shape corresponding to the shape of the region surrounded by the second portion 551, the third portion 552, the swivel base 3, and the counterweight 54. A sealing member is interposed between the upper end of the exterior cover 6 and the lower end of the operator's seat protector 55 to seal the gap (space) therebetween. In the present example embodiment, of the pair of side covers 61, 61, the side cover 61 on the right side includes a side cover portion 64 longer in the front-rear direction than the side cover portion 64 of the side cover 61 on the left side.

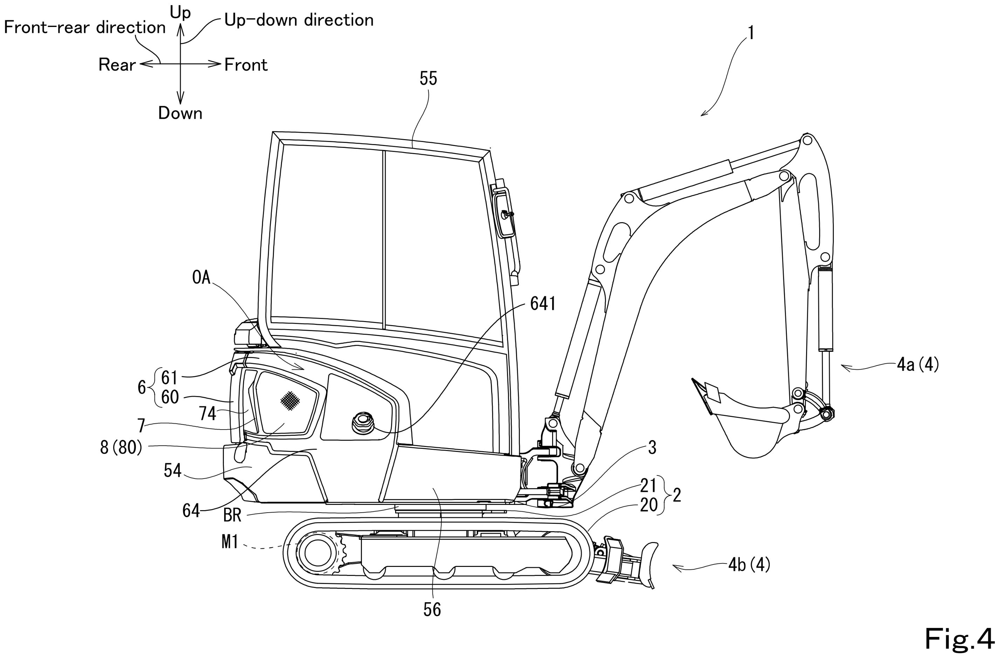

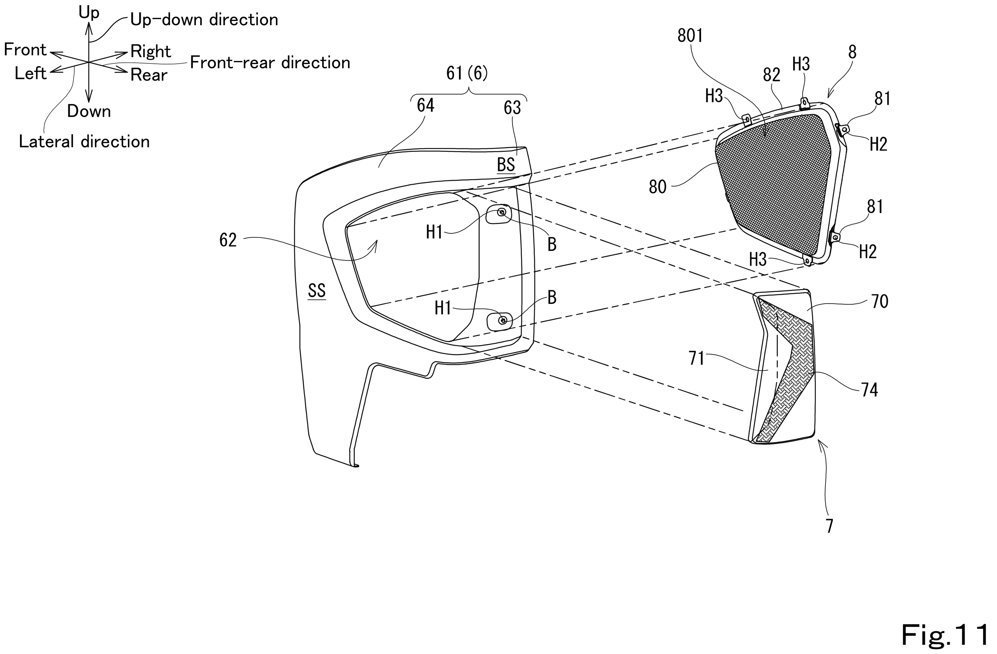

In the present example embodiment, as illustrated in FIG. 11, the exterior cover 6 includes an opening 62 to which the exterior components 7, 8 are to be attached. In the present example embodiment, each of the pair of side covers 61, 61 included in the exterior cover 6 includes the opening 62 to which the exterior components 7, 8 are attached. More specifically, in the present example embodiment, the side cover portion 64 of one side cover 61 of the pair of side covers 61, 61 that is on the left side faces the oil cooler 51. The side cover portion 64 of the other side cover 61 of the pair of side covers 61, 61 that is on the right side faces the muffler 53 (silencer 53) (see FIG. 9). Accordingly, the side cover portion 64 of the one side cover 61 includes the opening 62 in a region facing the oil cooler 51, and the side cover portion 64 of the other side cover 61 includes the opening 62 in a region facing the muffler 53. In the present example embodiment, the fuel tank is located in front of the prime mover 50 (below the operator's seat DS). Accordingly, the side cover portion 64 of the other side cover 61 on the right side includes a hole 641 at which a fuel inlet connected to the fuel tank is exposed. The hole 641 is located in front of the opening 62 (see FIGS. 2 and 4).

In the present example embodiment, the opening 62 in the side cover portion 64 is provided to attach the exterior component 8 (second exterior component 8) as a protective component described below. The second exterior component 8 will be described below. In the present example embodiment, the opening 62 in the side cover portion 64 allows the second exterior component 8 to be partially fitted therein.

More specifically, the opening 62 allows a second main body 80, described below, of the second exterior component 8 to be partially fitted therein. In other words, the opening 62 is larger than the second main body 80 of the second exterior component 8 and has a shape corresponding to the form of a portion (roughly half or more) of the periphery of the second main body 80.

In the present example embodiment, the opening 62 is located to overlap the region in which a first exterior component 7, described below, is provided. In the present example embodiment, the first exterior component 7 is attached to the rear cover portion 63, and the second exterior component 8 is attached to the side cover portion 64. The first exterior component 7 and the second exterior component 8 adjoin each other at (or around) the boundary between the rear cover portion 63 and the side cover portion 64. Accordingly, the opening 62 extends from the side cover portion 64 to the rear cover portion 63 near the boundary between the rear cover portion 63 and the side cover portion 64.

As described above, two or more exterior components 7, 8 are attached to the exterior cover 6. The two or more exterior components 7, 8 are arranged in the up-down direction or in a direction intersecting the up-down direction. Two of the exterior components 7, 8 that are adjacent to each other are arranged in an adjoining manner (see FIG. 10). In the present example embodiment, two exterior components 7, 8 are attached to each of the pair of side covers 61, 61 included in the exterior cover 6.

Two adjacent exterior components 7, 8 of the two or more exterior components 7, 8 are each made of resin or metal. The two exterior components 7, 8 may be made of different materials; one may be made of resin while the other may be made of metal. Alternatively, the exterior components 7, 8 may be made of a compound containing metal and resin.

The two adjacent exterior components 7, 8 of the two or more exterior components 7, 8 include respective joint portions 71, 81 which overlap each other when viewed in a direction intersecting an outer surface of the exterior cover 6 (which are stacked together in a direction intersecting an outer surface of the exterior cover 6) and which are joined to each other. More specifically, the two exterior components 7, 8 include respective main bodies 70, 80 and the joint portions 71, 81 connected to the respective main bodies 70, 80.

In the following description, one exterior component 7 of the two exterior components 7, 8 will be referred to as a first exterior component 7, and the other exterior component 8 of the two will be referred to as a second exterior component 8. The main body 70 of the first exterior component 7 will be referred to as a first main body 70, and the joint portion 71 of the first exterior component 7 will be referred to as a first joint portion 71. Accordingly, the main body 80 of the second exterior component 8 will be referred to as a second main body 80, and the joint portion 81 of the second exterior component 8 will be referred to as a second joint portion 81. When it is not necessary to distinguish the two exterior components 7, 8 from each other, the first exterior component 7 and the second exterior component 8 may be collectively referred to as the exterior components 7, 8; the first main body 70 and the second main body 80 may be collectively referred to as the main bodies 70, 80; and the first joint portion 71 and the second joint portion 81 may be collectively referred to as the joint portions 71, 81.

In the present example embodiment, the first exterior component 7 is a safety component, and the second exterior component 8 is a protective component. More specifically, the first exterior component 7 (safety component) includes a reflector 74 (reflection plate), and presents a warning to the surroundings that the working machine 1 is present. In the present example embodiment, the first exterior component 7 is attached to the rear cover portion 63 such that the first exterior component 7 overlaps the back surface BS of the rear cover portion 63. Thus, the first exterior component 7 presents a warning toward the rear that the working machine 1 is present.

In contrast, the second exterior component 8 (protective component) ensures the safety of the surroundings and protects the devices 5 in the machine compartment MR. More specifically, the second exterior component 8 (protective component) allows passage of air between the machine compartment MR and the outside to reduce the influence of heat on the devices 5 in the machine compartment MR, and restricts access to the machine compartment MR. In the present example embodiment, the second exterior component 8 is attached to the side cover portion 64. In the present example embodiment, the second exterior component 8 is attached so as to correspond to the opening 62 in the side cover portion 64.

More specifically, the first exterior component 7 and the second exterior component 8 (two adjacent exterior components 7, 8) respectively include the joint portions 71, 81 which overlap each other when viewed in a direction intersecting the outer surface of the exterior cover 6 (back surface BS of the rear cover portion 63 in the present example embodiment) and which are joined to each other.

More specifically, the first exterior component 7 includes the first joint portion 71 extending toward the second exterior component 8, and the second exterior component 8 includes the second joint portion 81 including one or more second joint portions 81 extending toward the first exterior component 7. The first joint portion 71 and the second joint portion 81 overlap when viewed in a direction perpendicular to the extending directions thereof (the first joint portion 71 and the second joint portion 81 are stacked together in a direction perpendicular to the extending directions thereof).

The first exterior component 7 includes the first main body 70 that overlaps the rear cover portion 63 (back surface BS) and the first joint portion 71 extending from the first main body 70. The reflector 74 is attached to the first main body 70. The reflector 74 may be any reflector that diffusely reflects light and may be, for example, a resin-molded product or an adhesive sheet. In the present example embodiment, the reflector 74 is an adhesive sheet cut in a predetermined design, and is attached to the outer surface of the first main body 70.

The first main body 70 is fixed with screws B located inside the exterior cover 6 (rear cover portion 63). More specifically, the screws B (bolts B) are inserted through the rear cover portion 63 from the inside (machine compartment MR) to the outside and screwed into the first main body 70, so that the first main body 70 is pulled toward the rear cover portion 63 and comes into close contact (or tight contact) or substantially close contact (or substantially tight contact) with the back surface BS of the rear cover portion 63.

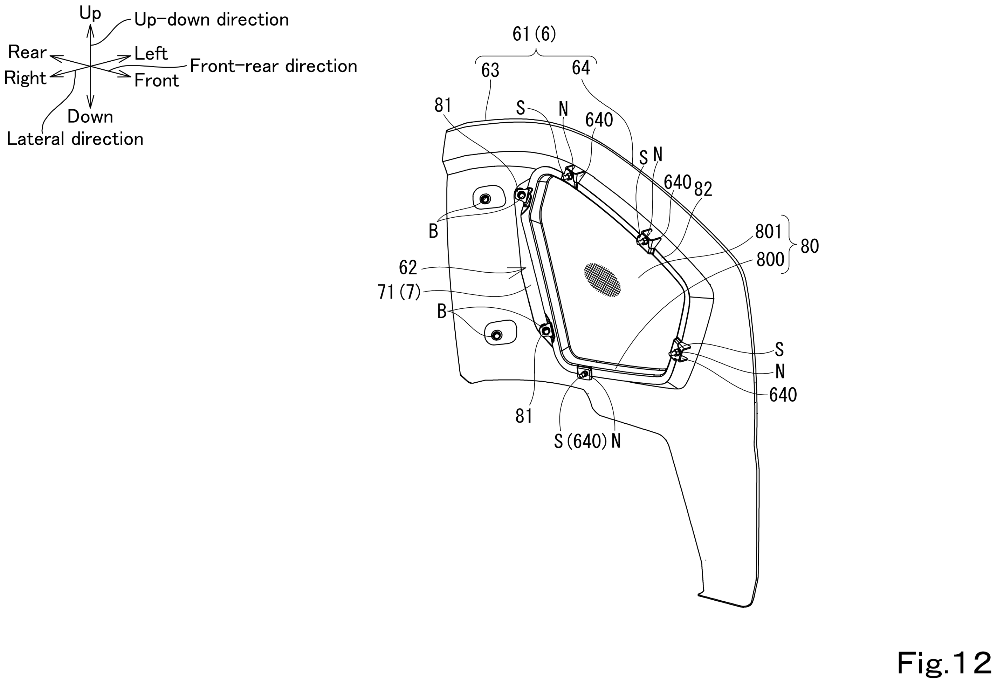

Referring to FIGS. 12 to 14, the first joint portion 71 and the second joint portions 81 are located within a range of the opening 62. In other words, the first joint portion 71 and the second joint portions 81 overlap within the range of the opening 62.

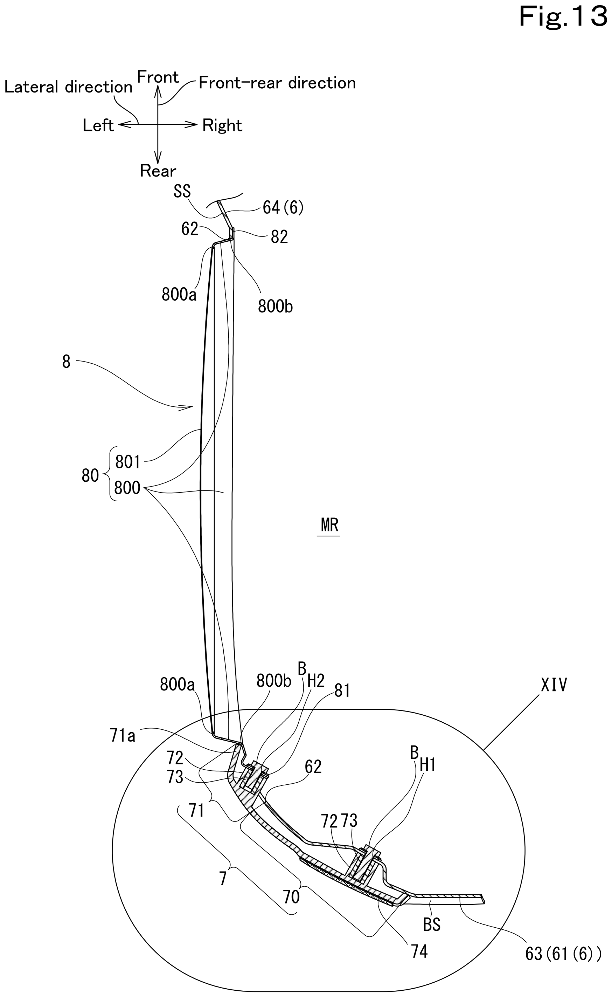

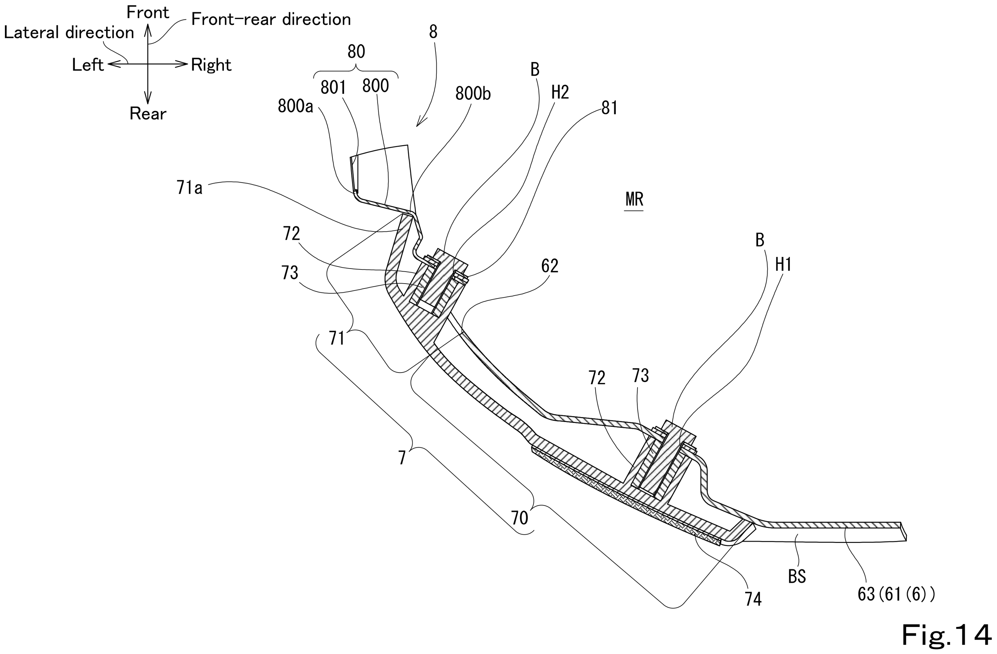

In the present example embodiment, the first exterior component 7 is a resin-molded product. As illustrated in FIGS. 13 and 14, the first main body 70 and the first joint portion 71 are integrally molded together. At least a portion of the first exterior component 7 on the rear cover portion 63 is shaped to conform to the back surface BS of the rear cover portion 63. As described above, the region around the boundary between the rear cover portion 63 and the side cover portion 64 is rounded. Accordingly, the first exterior component 7 has a shape conforming to the rounded region around the boundary between the rear cover portion 63 and the side cover portion 64.

The first exterior component 7 has an improved exterior design, and the outer surfaces of the first main body 70 and the first joint portion 71 are continuous with each other. In other words, the first main body 70 and the first joint portion 71 of the first exterior component 7 are integral with each other to improve the overall design. The first joint portion 71 is shaped to conform to the second exterior component 8 (second main body 80) adjacent thereto. In the first exterior component 7 of the present example embodiment, a portion that overlaps the back surface BS of the rear cover portion 63 is the first main body 70, and a portion that protrudes into the opening 62 is the first joint portion 71.

In the present example embodiment, as illustrated in FIG. 11, the opening 62 in each of the side covers 61, 61 extends beyond the boundary between the rear cover portion 63 and the side cover portion 64 and reaches a rounded region of the rear cover portion 63. Accordingly, in the present example embodiment, the first joint portion 71 is a portion that protrudes into the opening 62 (portion of the opening 62) in the rounded region of the rear cover portion 63.

In the present example embodiment, as illustrated in FIGS. 13 and 14, the first joint portion 71 externally overlaps the second joint portions 81. An end portion of the first joint portion 71 that is adjacent to the second exterior component 8 externally presses the second exterior component 8. More specifically, the first joint portion 71 includes a first end portion that is continuous with the first main body 70 and a second end portion 71a at the opposite end (end adjacent to the second exterior component 8). The second end portion 71a is bent inward.

In the present example embodiment, the first joint portion 71 (second end portion 71a) is shaped to conform to the second main body 80 (loop-shaped portion 800), described below, of the second exterior component 8, and presses (is in pressure contact with) the second exterior component 8 at or around the boundary between the second main body 80 and the second joint portions 81. The first end portion of the first joint portion 71 is not visible because the first main body 70 and the first joint portion 71 of the first exterior component 7 are integral and continuous with each other. Conceptually, the first end portion is a portion along the edge of the opening 62.

The first main body 70 and the first joint portion 71 include internal threads for receiving respective screws B on a surface facing the exterior cover 6 (side cover 61). In the present example embodiment, the first main body 70 and the first joint portion 71 include bosses 72 projecting inward at predetermined positions. Insert nuts 73, as the internal threads, are embedded in the bosses 72.

In the present example embodiment, the outer surface of the rear cover portion 63 of each of the side covers 61, 61 has an irregular shape corresponding to the form of the first main body 70 (form of the inner surface of the first main body 70). In the present example embodiment, the first main body 70 includes the bosses 72 projecting therefrom. Accordingly, the outer surface of the rear cover portion 63 includes hollows (recesses) for accommodating (receiving) the bosses 72. The rear cover portion 63 includes holes H1 through which the screws B are inserted and screwed into the insert nuts 73 (internal threads). As described above, the rear cover portion 63 includes recesses corresponding to the arrangement of the bosses 72. Accordingly, the holes H1 through which the screws B are inserted are located in the recesses in the rear cover portion 63.

As illustrated in FIG. 11, the second exterior component 8 (the other exterior component 8 of the two adjacent exterior components 7, 8) includes the second main body 80 and the second joint portions 81. The second exterior component 8 also includes a protruding portion 82 in addition to the second main body 80 and the second joint portions 81. In the present example embodiment, the second main body 80 and the second joint portions 81 of the second exterior component 8 are located within the opening 62 in the exterior cover 6 (see FIG. 12). As illustrated in FIG. 13, in the present example embodiment, the second main body 80 is configured to partially fit the opening 62 (can be partially fitted in the opening 62). When the second main body 80 is partially fitted to the opening 62, the second joint portions 81 are located within the opening 62 and overlap the first joint portion 71. The protruding portion 82 protrudes outward from a portion of the periphery of the second main body 80 that avoids the joint portions 71, 81 (the first joint portion 71 and the second joint portions 81). The protruding portion 82 overlaps the exterior cover 6 when the second main body 80 is fitted to the opening 62 in the exterior cover 6. In the present example embodiment, the protruding portion 82 faces the inner surface of the exterior cover 6 when the second main body 80 is fitted to the opening 62 from the inside of the exterior cover 6.

The second main body 80 is configured to partially fit the opening 62, and thus is shaped to conform to the shape of a portion of the opening 62. The second main body 80 is fitted to the opening 62 from the inside of the exterior cover 6 (from the machine compartment MR). The second main body 80 includes an air passage member 801 to allow passage of air between the inside and the outside of the exterior cover 6.

More specifically, the second main body 80 includes the loop-shaped portion 800 and the air passage member 801. The loop-shaped portion 800 is shaped to conform to a portion of the shape of the inner periphery of the opening 62, and is capable of being partially fitted to (fitted in) the opening 62. The air passage member 801 is connected to the loop-shaped portion 800 and is shaped to conform to the opening defined by the loop-shaped portion 800.

The loop-shaped portion 800 includes a first peripheral edge 800a and a second peripheral edge 800b in a direction perpendicular to the circumferential direction. The first peripheral edge 800a is located outward from the second peripheral edge 800b. The loop-shaped portion 800 partially faces the inner peripheral surface that defines the opening 62 when fitted in the opening 62 in the side cover portion 64. More specifically, when the second main body 80 is fitted in the opening 62 in the side cover portion 64, a portion of the loop-shaped portion 800 between the first peripheral edge 800a and the second peripheral edge 800b faces a portion of the inner peripheral surface that defines the opening 62.

The air passage member 801 is provided in an opening defined by the first peripheral edge 800a of the loop-shaped portion 800. In other words, the air passage member 801 is located on a side of the loop-shaped portion 800 on which the first peripheral edge 800a is provided. The air passage member 801 includes many holes (openings). More specifically, the air passage member 801 may be a member that allows passage of air therethrough, such as perforated metal, expanded metal, wire mesh, or the like. In the present example embodiment, the air passage member 801 includes wire mesh.

The second joint portions 81 are located within the range of the opening 62 when the second main body 80 is fitted to the opening 62. In the present example embodiment, the second joint portions 81 extend rearward (toward the first exterior component 7) from the second main body 80. The second joint portions 81 extend from the loop-shaped portion 800. More specifically, the second joint portions 81 are arranged along the second peripheral edge 800b of the loop-shaped portion 800.

The second joint portions 81 include holes H2 (hereinafter referred to as first insertion holes H2) through which screws B are inserted. The first joint portion 71 overlaps the second joint portions 81. Accordingly, the first insertion holes H2 in the second exterior component 8 are provided at positions corresponding to the internal threads (insert nuts 73) on the first exterior component 7.

The protruding portion 82 is joined to the side cover 61 (side cover portion 64). In the present example embodiment, the protruding portion 82 is provided along the second peripheral edge 800b of the loop-shaped portion 800. More specifically, the protruding portion 82 is provided along the second peripheral edge 800b in a region in which the joint portions 71, 81 are not provided. The protruding portion 82 faces a peripheral edge portion (inner surface) of the opening 62 in the side cover portion 64 when the second main body 80 is fitted in the opening 62. Thus, the second exterior component 8 is prevented from falling outward.

As illustrated in FIG. 11, the protruding portion 82 includes holes H3 (hereinafter referred to as second insertion holes H3), through which screws B can be inserted, at multiple locations. The second insertion holes H3 are arranged in the circumferential direction of the second main body 80 at predetermined intervals. Accordingly, as illustrated in FIG. 12, the externally threaded members 640 are attached to the inner surface of the side cover portion 64 so as to correspond to the arrangement of the second insertion holes H3. In other words, the externally threaded members 640 are located inside the side cover portion 64 around the opening 62. In the present example embodiment, the externally threaded members 640 are provided at multiple locations around the opening 62.

In the present example embodiment, the externally threaded members 640 are metal fittings including external threads S (male screws S), and are fixed to the inner surface of the side cover portion 64 such that the male screws S project inward. The externally threaded members 640 (male screws S) are located at positions corresponding to the second insertion holes H3 in the second exterior component 8.

Accordingly, the second exterior component 8 is fixed to the exterior cover 6 by inserting the male screws S of the externally threaded members 640 through the second insertion holes H3 and fastening nuts N onto the male screws S while the second main body 80 is fitted to the opening 62. In this state, as illustrated in FIGS. 13 and 14, the first exterior component 7 is placed on the outer surface of the rear cover portion 63, and screws B (bolts B) are inserted through the holes H1 in the rear cover portion 63 from the inside of the exterior cover 6 and screwed into the first main body 70 (insert nuts 73), so that the first exterior component 7 is fixed in close contact with the side cover 61 (rear cover portion 63). In this state, other screws B (bolts B) are inserted through the first insertion holes H2 in the second joint portions 81 from the machine compartment MR and screwed into the first joint portion 71 (insert nuts 73), so that the first joint portion 71 is joined to the second joint portions 81.

As the screws B (bolts B) are tightened to join the first joint portion 71 and the second joint portion 81 together, the first exterior component 7 (first joint portion 71) is pulled toward the second exterior component 8, so that the first exterior component 7 (first joint portion 71) comes into close contact with the second exterior component 8 with no gap therebetween. In the present example embodiment, as described above, the second end portion 71a of the first joint portion 71 is bent inward. Accordingly, the first joint portion 71 (second end portion 71a) comes into close contact with the second exterior component 8 at or around the boundary between the second main body 80 and the second joint portions 81.

As described above, according to the working machine 1 of the present example embodiment, even when the two exterior components 7, 8 (the first exterior component 7 and the second exterior component 8) attached to the exterior cover 6 (side cover 61) are arranged next to (in the vicinity of) each other, the first exterior component 7 is pulled toward and comes into close contact with the second exterior component 8, and the two exterior components 7, 8 (the first exterior component 7 and the second exterior component 8) are integrated or substantially integrated. Accordingly, the two adjacent exterior components 7, 8 (the first exterior component 7 and the second exterior component 8) have no unnecessary gap therebetween, and the evenness therebetween is increased. Thus, according to the working machine 1 of the present example embodiment, the two exterior components 7, 8 (the first exterior component 7 and the second exterior component 8) can be attached to the exterior cover 6 in a manner that provides a good appearance, allowing for improved design.

In the working machine 1 according to the present example embodiment, as described above, the oil cooler 51, the radiator 52, the prime mover 50 (internal combustion engine), and the muffler 53 (silencer 53) are arranged on the swivel base 3 in that order from left to right in the lateral direction. Accordingly, the side cover portion 64 of one side cover 61 on the left side faces the oil cooler 51, and the side cover portion 64 of the other side cover 61 on the right side faces the muffler 53 (silencer 53). The side cover portion 64 of each of the side covers 61, 61 has the second exterior component 8 including the air passage member 801 attached thereto. This allows outside air to be introduced into the machine compartment MR and heat to be exhausted from the machine compartment MR, and the devices 5 in the machine compartment MR can be protected.

The present invention is not limited to the above-described example embodiment, and alterations are possible as appropriate without departing from the gist of the present invention.

For example, in the above-described example embodiment, a backhoe is described as an example of the working machine 1. However, the working machine 1 is not limited to a backhoe. The working machine 1 may be, for example, another construction machine, an agricultural machine, or a utility vehicle (UV). More specifically, the working machine 1 may be, for example, a tractor, a skid-steer loader, or a wheel loader.

In the above-described example embodiment, the exterior cover 6 defines a rear hood that covers the devices 5 located at the rear portion of the swivel base 3, and the two exterior components 7, 8 (the first exterior component 7 and the second exterior component 8) are attached to each of the side covers 61, 61 included in the rear hood. However, this does not imply any limitation. For example, the exterior components 7, 8 may be attached to the center cover 60. In addition, although two exterior components 7, 8 (the first exterior component 7 and the second exterior component 8) are attached to the exterior cover 6 in the above-described example embodiment, three or more exterior components 7, 8, for example, may be arranged in the up-down direction or in a direction intersecting the up-down direction.

Also in this case, of course, the joint portions 71, 81 of the adjacent exterior components 7, 8 overlap each other and are joined to each other. One of the joint portions 71, 81 of the adjacent exterior components 7, 8 that is on the upper (outer) side includes an outer surface integrated (continuous) with the outer surface of the corresponding one of the main bodies 70, 80 to provide a design feature. This allows the other one of the joint portions 71, 81 that is on the lower (inner) side to be covered (hidden), so that the design is improved. More specifically, one of the joint portions 71, 81 which overlap each other is exposed to the outside, and is therefore configured to have a good appearance. Here, the good appearance is not limited to an appearance having a design feature (designed appearance), and may be any form integral with the main bodies 70, 80, even without a specific design or the like.

In the above-described example embodiment, the two exterior components 7, 8 (the first exterior component 7 and the second exterior component 8) are attached to outer surfaces (the outer surface of the rear cover portion 63 and the outer surface of the side cover portion 64) of the exterior cover 6 (side covers 61, 61) facing in different directions. However, this does not imply any limitation. For example, the two or more exterior components 7, 8 may be arranged on outer surfaces of the exterior cover 6 facing in the same direction.

In the above-described example embodiment, the exterior components 7, 8 are attached to the exterior cover 6 (rear hood) that covers the devices 5 located at a rear portion of the working machine 1 (swivel base 3). However, this does not imply any limitation. For example, the exterior components 7, 8 may be attached to a hood (front hood) that covers the devices 5 (e.g., the prime mover 50) provided in a front portion of the vehicle body, as in the case where the working machine 1 is a tractor or the like.

In the above-described example embodiment, the exterior components 7, 8 that are arranged next to each other include a safety component (first exterior component 7) for enhancing safety and a protective component (second exterior component 8) for providing gas permeability to protect the devices 5. However, this does not imply any limitation. The exterior components 7, 8 arranged next to each other on the exterior cover 6 may include only safety components or only protective components. The exterior components 7, 8 may be components other than safety components or protective components.

In the above-described example embodiment, the exterior cover 6 includes the opening 62, and the joint portions 71, 81 of the adjacent exterior components 7, 8 are each located within the range of the opening 62 in the exterior cover 6. However, this does not imply any limitation. For example, when the exterior cover 6 includes no opening 62, the joint portions 71, 81 of the adjacent exterior components 7, 8 may overlap each other and be joined to each other on the outer surface of the exterior cover 6. To eliminate or reduce a bulge in which the joint portions 71, 81 overlap, the exterior cover 6 may include a recess capable of receiving the joint portions 71, 81 (receiving at least one of the joint portions 71, 81 that is on the lower side). When the joint portions 71, 81 of the adjacent exterior components 7, 8 overlap on the outer surface of the exterior cover 6, the joint portions 71, 81 of the adjacent exterior components 7, 8 and the exterior cover 6 may be joined together. Also in this case, one of the joint portions 71, 81 that is on the outer side is pulled inward, so that the design can be improved as in the above-described example embodiment.

Example embodiments are as described above, and the present invention (example embodiments thereof) provides working machines 1 described in the items below.

(Item 1) A working machine 1 including an exterior cover 6, and two or more exterior components 7, 8 arranged in an up-down direction or in a direction intersecting the up-down direction and attached to the exterior cover 6 such that the two or more exterior components 7, 8 are visible externally, wherein two adjacent exterior components 7, 8 of the two or more exterior components 7, 8 include respective joint portions 71, 81 which overlap each other when viewed in a direction intersecting an outer surface of the exterior cover 6 and which are joined to each other.

With the working machine 1 of item 1, the joint portions 71, 81 of the two adjacent exterior components 7, 8 overlap each other when viewed in a direction perpendicular to the direction in which the exterior components 7, 8 are adjacent to each other, and are joined to each other, so that the two exterior components 7, 8 are integrated or substantially integrated. Accordingly, when two or more exterior components 7, 8 are arranged next to each other, adjacent ones of the exterior components 7, 8 are less likely to be attached in different manners. Thus, according to the working machine 1 of item 1, two or more exterior components 7, 8 can be attached to the exterior cover 6 in a manner that provides a good appearance, allowing for improved design.

(Item 2) The working machine 1 according to item 1, wherein the exterior cover 6 includes a recess or an opening 62 opening at least outward, and the joint portions 71, 81 of the two adjacent exterior components 7, 8 are each located within a range of the recess or the opening 62.

With the working machine 1 of item 2, the joint portions 71, 81 of the two adjacent exterior components 7, 8 are each located within the range of the recess or the opening 62. Accordingly, a bulge that would otherwise result from the overlap of the joint portions 71, 81 can be eliminated or reduced.

(Item 3) The working machine 1 according to item 1 or 2, wherein the exterior cover 6 includes an opening 62 through which an inside and an outside of the exterior cover 6 communicate with each other, and the two adjacent exterior components 7, 8 include respective main bodies 70, 80 and the joint portions 71, 81 connected to the respective main bodies 70, 80, the joint portions 71, 81 of the respective two adjacent exterior components 7, 8 are each located within a range of the opening 62, the corresponding main body 70 of one exterior component 7 of the two adjacent exterior components 7, 8 overlaps the outer surface of the exterior cover 6, and the corresponding joint portion 71 of the one exterior component 7 externally overlaps the corresponding joint portion 81 of the other exterior component 8 of the two adjacent exterior components 7, 8.

With the working machine 1 of item 3, the joint portions 71, 81 of the two exterior components 7, 8 are each located within the range of the opening 62, and the joint portion 71 of the one exterior component 7 overlaps the joint portion 81 of the other exterior component 8 at the outside of the joint portion 81. Accordingly, a bulge which would otherwise result from the overlap of the joint portions 71, 81 can be eliminated or reduced, and the joint portion 81 of the other exterior component 8 can be hidden by the joint portion 71 of the one exterior component 7.

(Item 4) The working machine 1 according to item 3, wherein the corresponding main body 70 of the one exterior component 7 has a reflector 74 attached thereto.

With the working machine 1 of item 4, the reflector 74 is attached to the main body 70, so that the exterior component 7 can function as a safety component.

(Item 5) The working machine 1 according to item 3 or 4, wherein the corresponding main body 80 of the other exterior component 8 includes an air passage member 801 to allow passage of air therethrough, the corresponding main body 80 and the corresponding joint portion 81 of the other exterior component 8 are located within the opening 62, and the air passage member 801 is configured to allow passage of air between the inside and the outside of the exterior cover 6.

With the working machine 1 of item 5, the main body 80 of the other exterior component 8 includes the air passage member 801. Accordingly, even when, for example, the temperature inside the exterior cover 6 increases due to the influence of the devices 5 covered by the exterior cover 6, heat can be exhausted, and the outside air can be introduced.

(Item 6) The working machine 1 according to item 5, wherein the corresponding main body 80 of the other exterior component 8 is configured to partially fit the opening 62, and the corresponding joint portion 81 of the other exterior component 8 extends from a periphery of the corresponding main body 80 of the other exterior component 8 and is located within the opening 62, and the other exterior component 8 includes a protruding portion 82 protruding outward from a portion of the periphery of the corresponding main body 80 that avoids the joint portions 71, 81, the protruding portion 82 being configured to face an inner surface of the exterior cover 6 when the corresponding main body 80 is fitted to the opening 62 from the inside of the exterior cover 6, and the protruding portion 82 is joined to the exterior cover 6.

With the working machine 1 of item 6, the main body 80 of the other exterior component 8 partially fits the opening 62 in the exterior cover 6, so that the other exterior component 8 is positioned at a predetermined position. Since the other exterior component 8 is integrated with the one exterior component 7, the one exterior component 7 is also positioned at a predetermined position. Thus, the two exterior components 7, 8 arranged next to each other are both located at appropriate positions, so that the overall design can be improved.

(Item 7) The working machine 1 according to any one of items 1 to 6, further including a traveling device 2 to travel, and a swivel base 3 supported by the traveling device 2 and turnable about an axis extending in the up-down direction, wherein the exterior cover 6 covers at least one device 5 provided on the swivel base 3.

With the working machine 1 of item 7, a slewing working machine capable of traveling and having an improved design can be provided.

(Item 8) The working machine 1 according to item 7, wherein the at least one device 5 is located at a rear portion of the swivel base 3 in a front-rear direction, and the exterior cover 6 defines a rear hood 6 to cover the at least one device 5.

With the working machine 1 of item 8, the exterior cover 6 to which the exterior components 7, 8 are attached is included in a rear hood. Accordingly, a slewing working machine including a rear hood having an improved design can be provided.

(Item 9) The working machine 1 according to item 8, wherein the rear hood 6 includes a rear cover portion 63 including a back surface BS facing rearward in the front-rear direction, and a side cover portion 64 including a side surface SS continuous with the rear cover portion 63 and facing outward in a lateral direction perpendicular to the up-down direction and the front-rear direction, one exterior component 7 of the two adjacent exterior components 7, 8 is located on the back surface BS of the rear cover portion 63, the other exterior component 8 of the two adjacent exterior components 7, 8 is located on the side surface SS such that the other exterior component 8 is adjacent to the one exterior component 7, the one exterior component 7 has a reflector 74 attached thereto, and the other exterior component 8 is configured to allow passage of air between an inside and an outside of the exterior cover 6.

With the working machine 1 of item 9, the reflector 74 is attached to the one exterior component 7 that is attached to the back surface BS of the rear cover portion 63. Accordingly, a safety warning can be presented toward the rear. The other exterior component 8 that is attached to the side cover portion 64 allows passage of air between the inside and the outside of the exterior cover 6. Accordingly, the influence of heat inside the exterior cover 6 (for example, on the device 5) can be reduced.

(Item 10) The working machine 1 according to any one of items 1 to 9, wherein the joint portions 71, 81 of the two adjacent exterior components 7, 8 are joined to each other via at least one screw B located inside the exterior cover 6, and the two or more exterior components 7, 8 are each attached to the exterior cover 6 via another at least one screw B located inside the exterior cover 6.

With the working machine 1 of item 10, the joint portions 71, 81 of the adjacent exterior components 7, 8 are joined to each other via the at least one screw B, and the two or more exterior components 7, 8 are each attached to the exterior cover 6 via the other at least one screw B located inside the exterior cover 6. Accordingly, the exterior components 7, 8 are securely attached to each other and to the exterior cover 6.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A working machine (1) comprising:
an exterior cover (6); and
two or more exterior components (7, 8) arranged in an up-down direction or in a direction intersecting the up-down direction and attached to the exterior cover (6) such that the two or more exterior components (7, 8) are visible externally; wherein
two adjacent exterior components (7, 8) of the two or more exterior components (7, 8) include respective joint portions (71, 81) which overlap each other when viewed in a direction intersecting an outer surface of the exterior cover (6) and which are joined to each other.

2. The working machine (1) according to claim 1, wherein
the exterior cover (6) includes a recess or an opening (62) opening at least outward; and
the joint portions (71, 81) of the two adjacent exterior components (7, 8) are each located within a range of the recess or the opening (62).

3. The working machine (1) according to claim 1 or 2, wherein
the exterior cover (6) includes an opening (62) through which an inside and an outside of the exterior cover (6) communicate with each other; and
the two adjacent exterior components (7, 8) include respective main bodies (70, 80) and the joint portions (71, 81) connected to the respective main bodies (70, 80), the joint portions (71, 81) of the respective two adjacent exterior components (7, 8) are each located within a range of the opening (62), the corresponding main body (70) of one exterior component (7) of the two adjacent exterior components (7, 8) overlaps the outer surface of the exterior cover (6), and the corresponding joint portion (71) of the one exterior component (7) externally overlaps the corresponding joint portion (81) of the other exterior component (8) of the two adjacent exterior components (7, 8).

4. The working machine (1) according to claim 3, wherein the corresponding main body (70) of the one exterior component (7) has a reflector (74) attached thereto.

5. The working machine (1) according to claim 3 or 4, wherein
the corresponding main body (80) of the other exterior component (8) includes an air passage member (801) to allow passage of air therethrough;
the corresponding main body (80) and the corresponding joint portion (81) of the other exterior component (8) are located within the opening (62); and
the air passage member (801) is configured to allow passage of air between the inside and the outside of the exterior cover (6).

6. The working machine (1) according to claim 5, wherein
the corresponding main body (80) of the other exterior component (8) is configured to partially fit the opening (62), and the corresponding joint portion (81) of the other exterior component (8) extends from a periphery of the corresponding main body (80) of the other exterior component (8) and is located within the opening (62); and
the other exterior component (8) includes a protruding portion (82) protruding outward from a portion of the periphery of the corresponding main body (80) that avoids the joint portions (71, 81), the protruding portion (82) being configured to face an inner surface of the exterior cover (6) when the corresponding main body (80) is fitted to the opening (62) from the inside of the exterior cover (6); and
the protruding portion (82) is joined to the exterior cover (6).

7. The working machine (1) according to any one of claims 1 to 6, further comprising:
a traveling device (2) to travel; and
a swivel base (3) supported by the traveling device (2) and turnable about an axis extending in the up-down direction; wherein
the exterior cover (6) covers at least one device (5) provided on the swivel base (3).

8. The working machine (1) according to claim 7, wherein
the at least one device (5) is located at a rear portion of the swivel base (3) in a front-rear direction; and
the exterior cover (6) defines a rear hood (6) to cover the at least one device (5).

9. The working machine (1) according to claim 8, wherein
the rear hood (6) includes:
a rear cover portion (63) including a back surface (BS) facing rearward in the front-rear direction; and
a side cover portion (64) including a side surface (SS) continuous with the rear cover portion (63) and facing outward in a lateral direction perpendicular to the up-down direction and the front-rear direction;
one exterior component (7) of the two adjacent exterior components (7, 8) is located on the back surface (BS) of the rear cover portion (63); and
the other exterior component (8) of the two adjacent exterior components (7, 8) is located on the side surface (SS) such that the other exterior component (8) is adjacent to the one exterior component (7), the one exterior component (7) has a reflector (74) attached thereto, and the other exterior component (8) is configured to allow passage of air between an inside and an outside of the exterior cover (6).

10. The working machine (1) according to any one of claims 1 to 9, wherein
the joint portions (71, 81) of the two adjacent exterior components (7, 8) are joined to each other via at least one screw (B) located inside the exterior cover (6); and
the two or more exterior components (7, 8) are each attached to the exterior cover (6) via another at least one screw (B) located inside the exterior cover (6).
